# EUROPEAN PATENT APPLICATION

(11) **EP 1 976 091 A2**
(43) Date of publication of application: **01.10.2008**
(21) Application number: 08152692.3
(22) Date of filing: 13.03.2008
(51) Int. Cl.: H02J 7/00

(54) **Portable terminal device, battery charger and adaptor to set portable terminal device thereon**

(30) Priority: 30.03.2007 JP 2007091305
(71) Applicant: FUJITSU LIMITED, Kawasaki-shi, Kanagawa 211-8588 (JP)
(72) Inventor: Kohata, Keiji, Kawasaki-shi, Kanagawa 211-8588 (JP)
(74) Representative: Wilding, Frances Ward

(57) **Abstract**

The disclosure relates to a portable terminal device, such as a cell phone terminal device (1), and an adaptor in which the portable terminal device is disposed thereon. The portable terminal device includes a projection (14) on an end of its bodies matching with a shape of a hook (21) incorporated in the adaptor on which the portable terminal device is set. A battery charger (2) to charge the portable terminal device set thereon includes a terminal (24) electrically connected with a charging terminal of the portable terminal device, a wall (22) for holding the portable terminal device set thereon, and a hook (21) incorporated in a main body of the battery charger (2), hinged at an end of the portable terminal device, having a shape matching with the projection (14) formed on the body of the portable terminal device.

## Description

### TECHNICAL FIELD

This disclosure relates to a portable terminal device, and, more specifically, relates to a portable terminal device, such as a cell phone terminal device, that can be set onto a battery charger. This disclosure also relates to an adaptor on which the battery charger or the portable terminal device is set.

A cell phone device is indicated as an example of the portable terminal device hereinafter. However, a portable terminal device relating to this disclosure is not limited to the cell phone device.

### BACKGROUND OF THE INVENTION

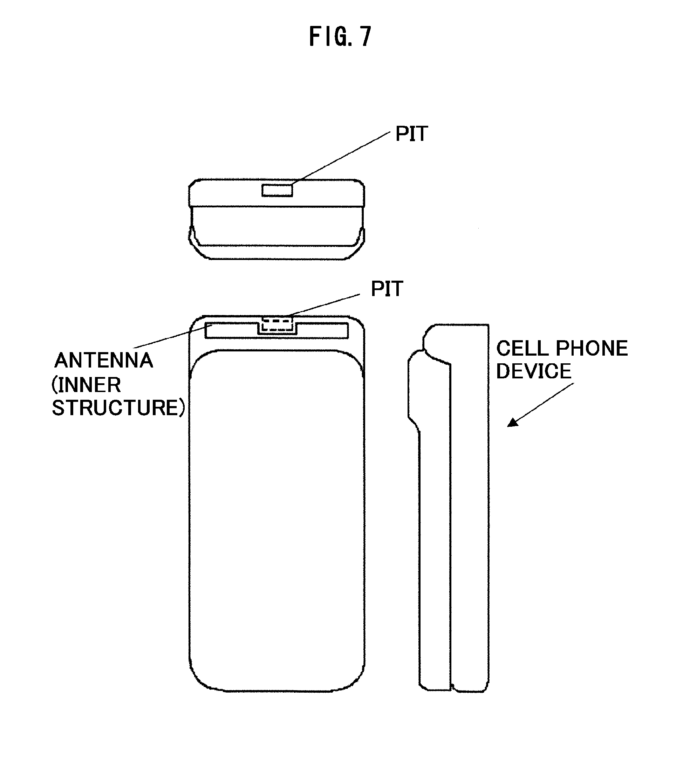

FIG. 7 shows a cell phone device seen from three angles, that is one form of the portable terminal devices. The cell phone device shown in FIG. 7 is a device having a collapsible body. To charge a battery within the cell phone device shown in FIG. 7, a tabletop battery charger for a cell phone terminal has been used.

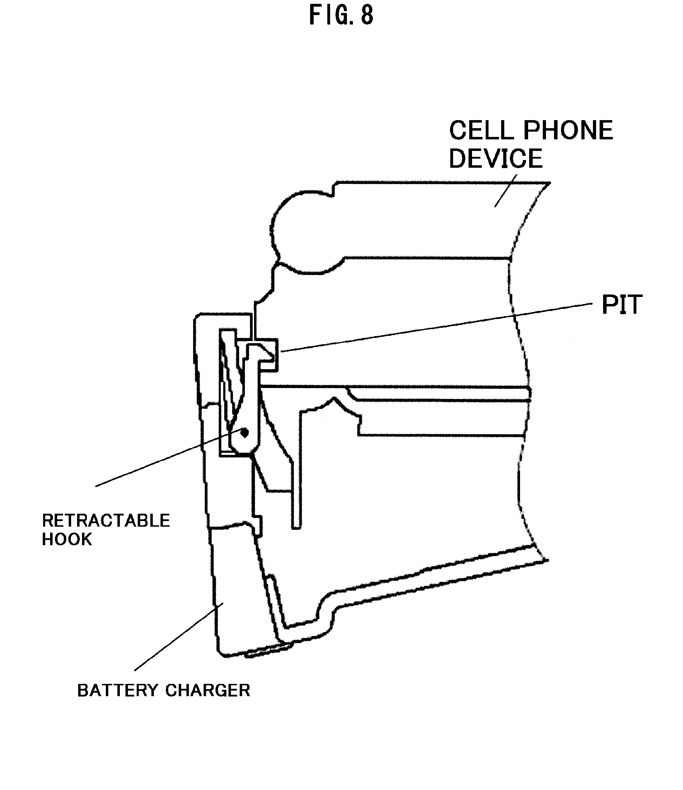

FIG. 8 shows an enlarged view of a substantial portion of a conventional battery charger. For the conventional battery charger, the cell phone device set on the battery charger is secured by inserting a retractable hook housed in the battery charger into a pit formed on the top edge of the cell phone device.

[Patent Publication 1] Japanese Laid-open Patent Publication 2005-006149

[Patent Publication 2] Japanese Laid-open Patent Publication 1999-111344

However, the conventional battery charger requires forming the pit on the top edge of the cell phone device, which arises cosmetic issues such that it mars a design of the cell phone device. Although the pit is not so large, the external appearance is significantly important for the cell phone device. Therefore, it is preferable to avoid forming any pit on the cell phone device as much as possible.

Further, a structural object, such as an antenna, is disposed within a body of the cell phone device, in the vicinity of the top edge of the cell phone device. If the pit has to be formed on a body of the cell phone device, an exterior wall of the cell phone device will dent inside of a body of the cell phone device due to the pit as shown in FIG. 7. Such pit limits a layout and mounting of an inner structure of the cell phone device, such that the antenna should be mounted in a position not interfering with the pit. For the cell phone device, it is strongly demanded to reduce its size, so even if the size of the pit is so small, such pit on the cell phone device may affect the mounting of the inner structure.

Additionally the conventional battery charger has a walled frame surrounding the cell phone device set thereon in all directions. Due to the walled frame, the conventional battery charger can hold the cell phone device securely. However, the walled frame makes setting the cell phone device onto or unsetting the cell phone device from the battery charger difficult. As shown in FIG. 8, to set the cell phone device onto the battery charger, an underside of the cell phone device is set onto the battery charger first, then an upside of the cell phone is put therein. Adversely where the upside of the cell phone device is set first, the walled frame of the battery charger interferes with the cell phone device, which may raise various issues such that the cell phone device is damaged from setting onto the battery charger.

This disclosure aims to realize the cell phone terminal device, the battery charger and the adaptor for the cell phone terminal device that overcomes the issues mentioned above.

### SUMMARY

According to an embodiment of a first aspect of the present invention, a portable terminal device is provided that can be (is configured to be) set on to an adaptor, the portable terminal device comprising a projection on an end of its bodies (or body) matching with a shape of a hook incorporated in the adaptor on which the portable terminal device is (configured to be) set.

Further, the portable terminal device may comprise a first body positioned on a lower side of the portable terminal device when the portable terminal device is set onto the adaptor, and a second body lies on the first body, wherein the projection is formed on the first body.

According to an embodiment of a second aspect of the present invention, a battery charger to charge a portable terminal device set thereon is provided, (the charger) comprising a terminal electrically connected with (connectable to) a charging terminal of the portable terminal device, a wall for holding the portable terminal device set thereon, and a hook incorporated in a main body of the battery charger, (the hook being) hinged at an end of the portable terminal device, (the hook) having a shape matching with the projection formed on the body of the portable terminal device.

Moreover, the battery charger may further comprise an urging means for urging the hook in a direction against the portable terminal device set thereon, wherein the portable terminal device is (configured to be) secured by the hook employing the urging means.

Further, the battery charger may comprise a first wall formed on a second side of the battery charger horizontally opposed to a first side on which the hook is formed for holding a bottom of the portable terminal device, and a second wall for holding sides of the portable terminal device.

Further, the battery charger may have a first opening that is formed on the first wall to partially expose the bottom of the portable terminal device set thereon.

Further, the battery charger may have a second opening that is formed between the first wall and the second wall to partially expose sides of the portable terminal device set thereon.

### BRIEF DESCRIPTION OF THE DRAWINGS

FIG. 1 shows external appearances of an embodiment of the cell phone device and the battery charger.

FIG. 2 illustrates a procedure to set the cell phone device onto the battery charger.

FIG. 3 shows a cross-section view of a structure of the retractable hook on a lateral direction.

FIG. 4A shows an overhead view of the battery charger with the cell phone device set thereon.

FIG. 4B shows a side view of the battery charger with the cell phone set thereon.

FIG. 4C shows a top view of the cell phone device.

FIG. 4D shows a bottom view of the cell phone device.

FIG. 5 shows the cell phone set on the battery charger with its bodies unfolded.

FIG. 6 illustrates another procedure to set the cell phone device onto the battery charger.

FIG. 7 shows the external appearances of the conventional cell phone.

FIG. 8 shows an enlarged view of the substantial portion of the conventional battery charger.

### DETAILED DESCRIPTION OF THE EMBODIMENT

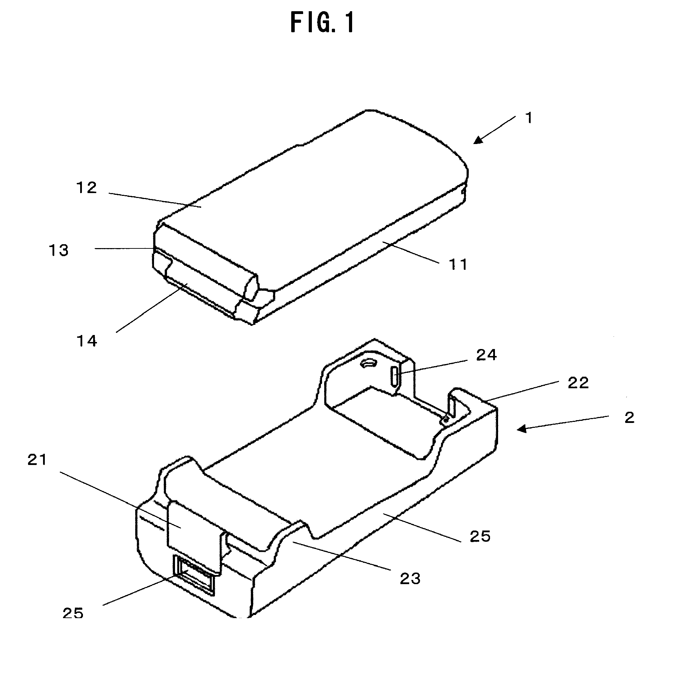

FIG. 1 shows an embodiment of a cell phone device and a battery charger. In FIG. 1, 1 is the cell phone device and 2 is the battery charger.

As shown in FIG. 1, a first body 11 of the cell phone device 1 is hinged to a second body 12 at a hinge 13, which makes the cell phone openable and closable. FIG. 1 shows the cell phone device 1 with the first body 11 and the second body 12 in a closed position. The first body 11 of the cell phone device 1 has a projecting portion 14 in the vicinity of the hinge 13. The projecting portion 14 is engaged to a retractable hook 21 of the battery charger 2 when the cell phone device 1 is set to the battery charger 2, as described later.

The battery charger 2 has the retractable hook 21 to hold an end of the cell phone device 1 set thereon, first walls 22 to hold the underside of the cell phone device 1 and second walls 23 to hold an upside of the cell phone device 1. The second walls 23 specify a position of the cell phone device 1 set onto the battery charger 2 in a lateral direction.

Additionally the battery charger 2 has terminals 24 that connect to charging terminals (not shown) of the cell phone device 1 inside of the first walls 22. A connector 25 for connecting a power cord is formed on a left side of the battery charger 2 as shown in FIG. 1, thereby charging the cell phone device 1 set on the battery charger 2.

As shown in FIG. 1, one of the four sides of the battery charger 2 where the retractable hook 21 is incorporated does not have any wall.

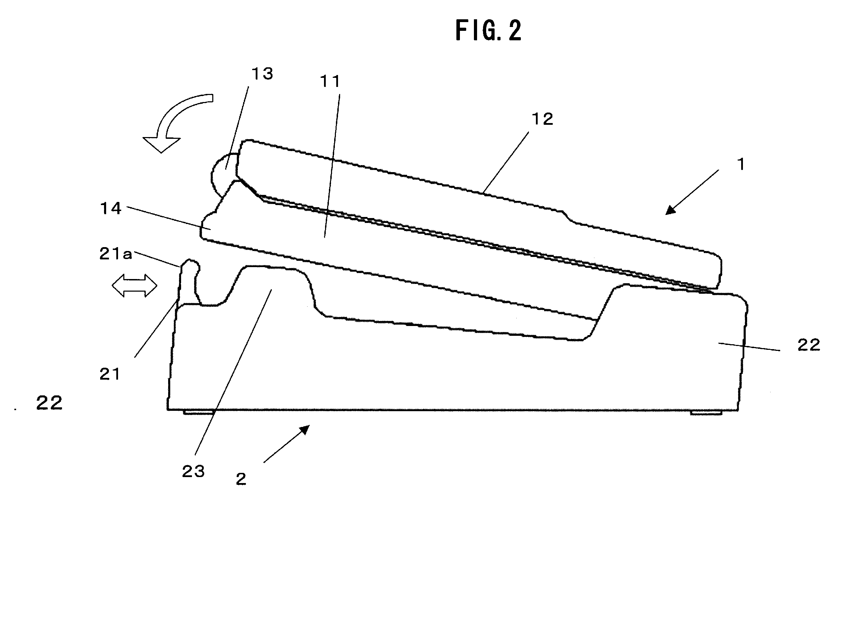

FIG. 2 shows how to set the cell phone device 1 onto the battery charger 2 of the embodiment. As shown in FIG. 2, the first body 11 of the cell phone device 1 has the projecting portion 14 thereon. A head 21a of the retractable hook 21 engages the projecting portion 14 of the cell phone device 1. The retractable hook 21 is incorporated in a main body 25 of the battery charger 2, retracting in both directions indicated by a two-headed arrow in FIG. 2. The retractable hook 21 is urged in a right direction by an urging means (not illustrated in FIG. 2).

When setting the cell phone device 1 onto the battery charger 2, firstly the underside of the cell phone device 1 is inserted between the first walls 22 of the battery charger 2, thereby the charging terminals of the cell phone device 1 connect with the terminals 24 of the battery charger 2 electrically.

Then the cell phone device 1 is pushed down further in the direction indicated by the down-arrow. Further, as the cell phone device 1 is pushed down, the projecting portion 14 contacts with the retractable hook 21, pushing the retractable hook 21 in the left direction. Whereas the retractable hook 21 is impelled to return rightward by an urging force of a spring, thus the head 21a of the retractable hook 21 engages the projecting portion 14, securing the upside of the cell phone device 1.

The projecting portion 14 can be formed to have an inclination or to have a projecting form. One example shown in FIG. 2 is of the projecting portion 14 having a crescent like shape from a lateral view. The first body 11 of the cell phone device 1 of the present embodiment has the projecting portion 14, which frees a little room inside of the first body 11. Additionally there is no need to form the pit on the cell phone device in the conventional manner so that an inner wall of the first body 11 does not project inside thereof, which facilitates to secure more room to mount inner structure within the cell phone device 1, as shown in FIG. 2.

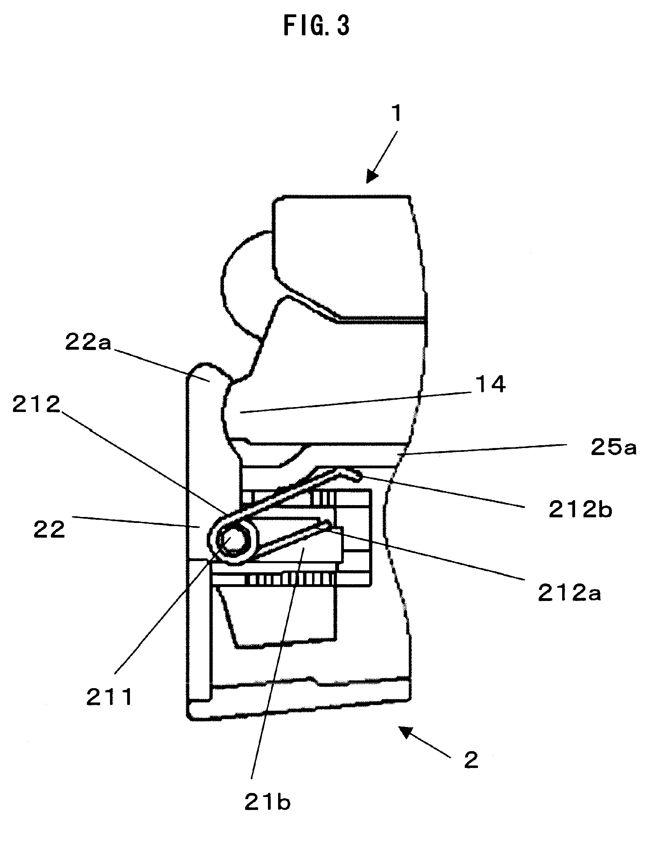

FIG. 3 shows a cross-section view of a periphery structure of the retractable hook 21 of the present embodiment in a lateral direction. As shown in FIG. 2 and FIG. 3, the retractable hook 21 is incorporated in the far left of the battery charger 2. Viewing from the lateral direction, the retractable hook 21 is formed in an inverted L-shape, which rotates about an axis 211 of a main body 25 of the battery charger 2.

The retractable hook 21 is urged by a spring 212, and one end of the spring 212a is fixed onto an upper side of an end 21b of the retractable hook 21, while the other end of the spring 212b contacts with an underside of the battery charger 25a. In this structure, the end of the retractable hook 21b is urged by the spring 212 downward, and the end of the retractable hook 21 a is urged rightward.

FIG. 3 shows an engaging-state of the retractable hook 21 and the projecting portion 14. The head of the retractable hook 21a is formed to have a dent matching with the projecting portion 14, thereby engaging the projecting portion 14 securely when the cell phone device 1 is set onto the battery charger 2.

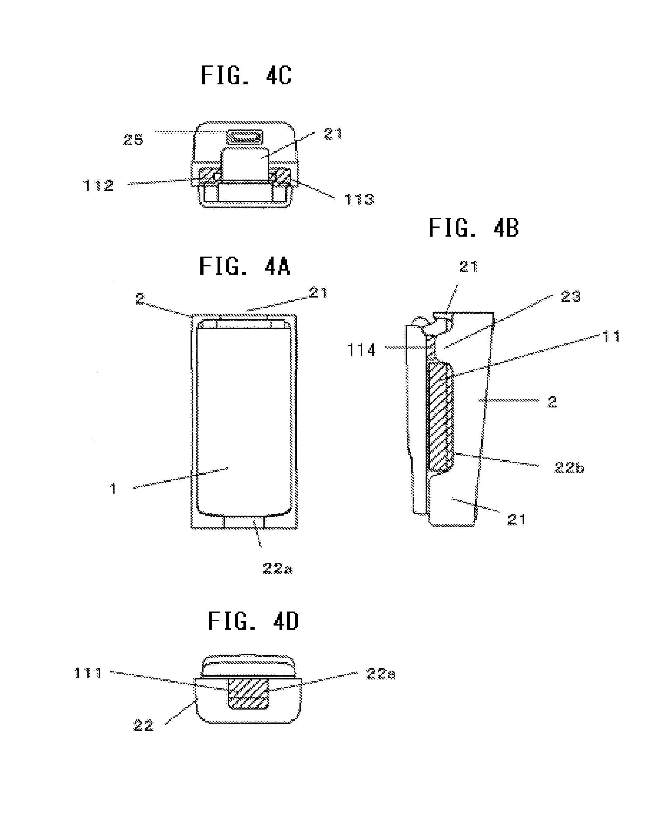

FIG. 4 shows views of the cell phone device 1 set onto the battery charger 2 in four directions. FIG. 4A shows an overhead view of the battery charger 2 with the cell phone 1 set thereon. FIG. 4B shows a side view of the battery charger 2 with the cell phone 1 set thereon. FIG. 4C shows a top view of the cell phone device 1. FIG. 4D shows the bottom view of the cell phone device 1. FIGS. 4A-4D are collectively called "FIG. 4" hereinafter.

Shaded areas shown in FIG. 4 correspond to the first body 11 of the cell phone device 1. In this embodiment, the battery charger 2 is formed in order to expose the shaded areas of the cell phone device 1.

Typically, the cell phone device 1 has a connector 111, to which a cable for transmitting data between the cell phone device 1 and an external device connects, on its underside. If the underside of the cell phone device 1 is covered with a wall of the battery charger 2 completely, plugging the cable into the connector 111 of the cell phone device 1 when the cell phone is set onto the battery charger 2 is interfered by the wall of the battery charger 2. To solve this problem, an opening 22a is formed between the first walls 22 of the battery charger 2 of the embodiment, which enables to connect the cable to the connector 111 through the opening 22a.

Further, the cell phone device 1 has a variety of keys such as a speaker volume adjustment key for adjust speaker volume when a use is making a call by using a speaker, or a slot to slot in a memory media such as a SD card on its sides. When operating the cell phone device 1 with the various keys while the cell phone device 1 is charged, the keys can be readily operated due to the openings 22b formed between the first walls 22 and the second walls 23.

Typically, on the upside of the cell phone device 1, a space 112 for tying a strap is laid out. Alternatively, as a demand to receive TV broadcasting by using the cell phone device 1 raised recently, an antenna 113 for receiving TV broadcasting is laid out on the upside of the cell phone device 1.

The retractable hook 21 is designed to hold only the center of the head of the cell phone device 1 in this embodiment, so that if a strap is tied in the vicinity of the upside of the cell phone device 1, such strap shall not obstruct setting of the cell phone device 1 onto the battery charger 2. In addition, since the battery charger 2 has no wall on the side facing the side of the cell phone device 1 that the antenna 113 is laid out, the antenna 113 can be extended in receiving the TV broadcasting when the cell phone device 1 is set onto the battery charger 2, enabling receiving the TV broadcasting by the cell phone device 1.

Further a speaker 114 is incorporated on one side of the cell phone device 1, which allows a user to listen audio information such as music stored in the cell phone device 1 with the cell phone device 1 that is in a folded position. Since the side all of the battery charger 2 has the opening, the speaker 114 shall not be covered by the side wall of the battery charger 2, which allows listening to audio information without a hindrance.

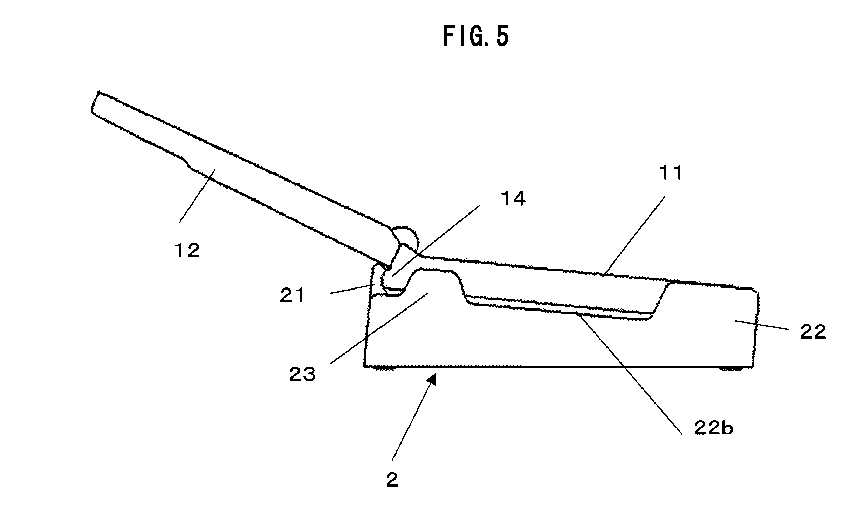

FIG. 5 shows the cell phone device 1 set onto the battery charger 2 with its second body 12 unfolded. As shown in FIG. 3, the retractable hook 21 engages the first body 11 at the position relatively close to a lower side. Referring to FIG. 1 or FIG. 4, there is no component but the retractable hook 21 on the left side of the battery charger 2. Thus the second body 12 of the cell phone device 1 can be unfolded without being interfered with by the battery charger 2.

Employing such structure allows unfolding the second body 12 of the cell phone device 1 with its entire body set onto the battery charger 2 without any obstacle, as shown in FIG. 5. So a variety of information can be displayed onto a display panel of the cell phone device 1 when the cell phone is charged.

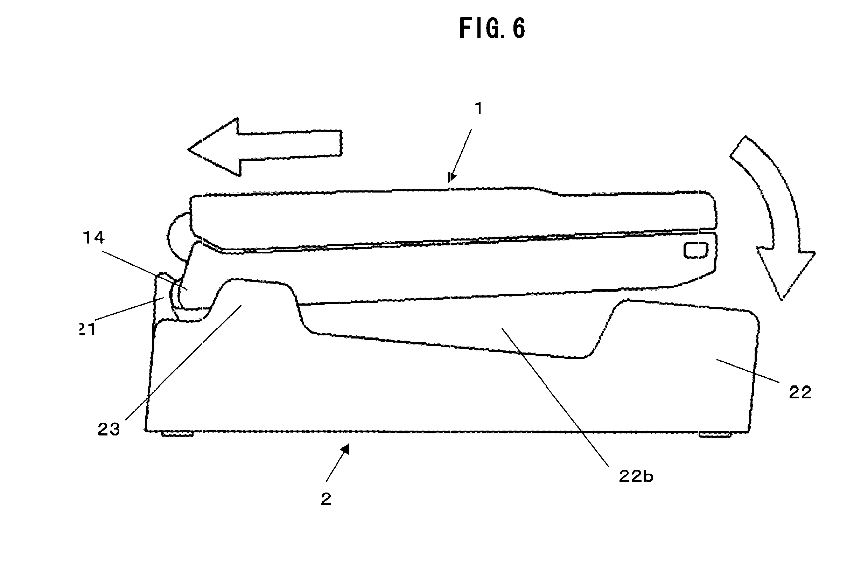

FIG. 6 shows another procedure to set the cell phone device 1 onto the battery charger 2 of the embodiment. Firstly, the upside of the cell phone device 1 is contacted with the retractable hook 21, then the head 21a of the retractable hook 21 engages the projecting portion 14. Secondly, the cell phone device 1 is pushed leftward to retract the retractable hook 21, pushing down the bottom of the cell phone device 1 further. The battery charger 2 in this embodiment has no wall on the side where the retractable hook 21 is laid out so that the cell phone device 1 can be pushed rightward. Since there is no wall interfering the call phone device 1, the cell phone device 1 does not suffer damage on its surface from setting the cell phone device 1 onto the battery charger 2.

As stated above, this disclosure saves a step to form the pit to be held by the hook of the battery charger on the cell phone device. Thus the cosmetic issue on the appearance of the cell phone device is solved, and further which facilitates to provide an additive room within the cell phone device compared to the conventional cell phone device.

Further, this disclosure facilitates setting of the cell phone device onto the battery charger compared to the conventional manner.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A portable terminal device that can be set on to an adaptor, comprising:
a projection on an end of the portable terminal device matching with a shape of a hook incorporated in the adaptor on which the portable terminal device is set.

2. The portable terminal device according to claim 1, comprising:
a first body positioned on a lower side of the portable terminal device when the portable terminal device is set onto said adaptor; and
a second body that lies on said first body,
wherein the projection is formed on said first body.

3. A battery charger to charge a portable terminal device set thereon, comprising:
a terminal electrically connected with a charging terminal of the portable terminal device;
a wall for holding the portable terminal device set thereon; and
a hook incorporated in a main body of the battery charger, hinged at an end of the portable terminal device, having a shape matching with a projection formed on a body of the portable terminal device.

4. The battery charger according to claim 3, further comprising:
an urging means for urging said hook in a direction against the portable terminal device set thereon;
wherein the portable terminal device is secured by the hook employing the urging means.

5. The battery charger according to claim 3 or 4, comprising:
a first wall formed on a second side of the battery charger horizontally opposed to a first side on which the hook is formed for holding a bottom of the portable terminal device; and
a second wall for holding sides of the portable terminal device.

6. The battery charger according to claim 5, wherein:
a first opening is formed on the first wall to partially expose the bottom of the portable terminal device set thereon.

7. The battery charger according to claim 5 or 6, wherein:
a second opening is formed between the first wall and the second wall to partially expose sides of the portable terminal device set thereon.

8. A system comprising a portable device as claimed in claim 1 or 2, and said adaptor.

9. A system comprising a battery charger as claimed in any of claims 3 to 7 and said portable terminal device.
